(19) Europäisches Patentamt
European Patent Office
Office européen des brevets

(11) **EP 3 714 548 B1**

(12) **EUROPÄISCHE PATENTSCHRIFT**

(45) Veröffentlichungstag und Bekanntmachung des Hinweises auf die Patenterteilung:
**03.11.2021 Patentblatt 2021/44**

(21) Anmeldenummer: **18803936.6**

(22) Anmeldetag: **14.11.2018**

(51) Int Cl.:
**H04B 3/54** (2006.01)

(86) Internationale Anmeldenummer:
**PCT/EP2018/081144**

(87) Internationale Veröffentlichungsnummer:
**WO 2019/101586 (31.05.2019 Gazette 2019/22)**

(54) **VERFAHREN UND SYSTEM ZUR UNTERDRÜCKUNG EINES STÖRSIGNALS BEI DER DETEKTION EINES CHIRP-SIGNALS**

METHOD AND SYSTEM FOR INTERFERENCE REDUCTION BY THE DETECTION OF A CHIRP SIGNAL

PROCÉDÉ ET SYSTÈME POUR LA RÉDUCTION D'INTERFÉRENCE À LA DÉTECTION D'UN SIGNAL CHIRP

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.11.2017 DE 102017220828**

(43) Veröffentlichungstag der Anmeldung:
**30.09.2020 Patentblatt 2020/40**

(73) Patentinhaber: **Robert Bosch GmbH**
**70442 Stuttgart (DE)**

(72) Erfinder: **LIU, Wenqing**
**71263 Weil Der Stadt (DE)**

(56) Entgegenhaltungen:
**EP-A1- 1 011 234      WO-A1-96/19056**
**US-A1- 2014 112 398**

**Beschreibung**

Die Erfindung betrifft ein Verfahren zur Unterdrückung eines Störsignals bei der Detektion eines Chirp-Signals aus einem Eingangssignal. Die Erfindung betrifft auch ein System zur Unterdrückung eines Störsignals bei der Detektion eines Chirp-Signals aus einem Eingangssignal.

Stand der Technik

Bei der Übertragung von Daten über Bussysteme ist es üblich, vollständige Datenpakete zu übertragen. Ein solches Datenpaket umfasst beispielsweise ein Chirp-Signal am Anfang eines Datenpakets gefolgt von Nutzdaten. Ein Sender erzeugt dabei das Datenpaket, welches ein definiertes Chirp-Signal und die Nutzdaten umfasst. Ein Empfänger detektiert das definierte Chirp-Signal und verarbeitet die folgenden Nutzdaten. Somit ist eine Synchronisierung von Datenpaketen zwischen Sendern und Empfängern bei der Übertragung von Daten über das Bussystem möglich.

Eine derartige Übertragung von Daten wird bei einer Vielzahl von Bussystemen eingesetzt, beispielsweise in Powerline-Systemen, bei welchen Energieübertragung und Datenübertragung über die gleichen Leitungen stattfindet. Unter anderem aus dem Dokument "Specification for PowerLine Intelligent Metering Evolution", R1.4 von PRIME Alliance TWG ist es bekannt, Chirp-Signale zur Synchronisierung zu verwenden.

Die Druckschrift EP 1 011 234 A1 offenbart ein OFDM (Orthogonal Frequency-Division Multiplexing) System, welches einen Hochfrequenzempfänger umfasst. Zur Synchronisierung ist ein Korrelator vorgesehen, welcher eine Korrelation zwischen einem empfangenen Signal und einem definierten Chirp-Signal durchführt.

Bei der Übertragung von Daten über Bussysteme können Störungen, insbesondere in Form von Störsignalen, auftreten. Störsignale werden beispielsweise über Datenleitungen eingekoppelt, welche wie Antennen wirken. Eingekoppelte Störsignale werden den Datensignalen überlagert, wodurch die übertragenen Daten verändert werden können. Auch die Detektion von Chirp-Signale wird durch Störsignale erschwert.

Ein Chirp-Signal ist in der Regel sinusförmig. Eine Detektion des Chirp-Signals ist besonders erschwert, wenn eingekoppelte Störsignale eine gleiche oder ähnliche Frequenz wie das zu detektierende Chirp-Signal aufweisen. Eine zuverlässige Erkennung des Chirp-Signals ist aber für die Synchronisation bei der Übertragung von Daten wesentlich.

Aus der US 2014/0112398 ist ein OFDM-Synchronisierer für eine Datenübertragung mittels Powerline bekannt. Der Synchronisierer umfasst dabei einen Korrelator, welche eine Multiplikation eines Eingangssignals mit einem lokal gespeicherten Chirp-Referenzsignal durchführt.

Ein Verfahren zum Empfangen von Chirp-Signalen an einer Empfängereinrichtung ist auch aus der DE 10 2012 007 874 A1 bekannt. Dabei wird ein empfangenes Chirp-Signal mit einem generierten Chirp-Signal multipliziert. Das so erhaltene Mischsignal wird anschließend mit einem Chirp-Referenzsignal korreliert.

Die CN 105553511 offenbart ein Verfahren zur Unterdrückung von Störsignalen für ein Breitbandübertragungssystem, welches auf nicht linearen Chirp-Pulsen basiert. Dabei wird das zur Datenübertragung genutzte Breitband in mehrere schmale Bänder unterteilt, und in den schmalen Bändern werden separate Chirp-Pulse zur Synchronisierung verwendet.

Die WO 96/19056 A1 offenbart Verfahren zur Unterdrückung eines Störsignals bei der Detektion eines Chirp-Signals aus einem Eingangssignal, umfassend die Schritte: Aufnehmen des Eingangssignals; Berechnung eines Ausgangssignals als Korrelation aus dem aufgenommenen Eingangssignal und einem Chirp-Referenzsignal mittels eines Korrelators.

Offenbarung der Erfindung

Es wird Verfahren zur Unterdrückung eines Störsignals bei der Detektion eines Chirp-Signals aus einem Eingangssignal vorgeschlagen. Das Verfahren ist in verschiedenen Bussystemen zur Datenübertragung verwendbar, insbesondere bei Powerline-Systemen. Das erfindungsgemäße Verfahren umfasst mehrere Schritte, welche nachfolgend erläutert werden:
Zunächst erfolgt das Aufnehmen des Eingangssignals. Bei dem Eingangssignal handelt es sich es um ein Nutzsignal, welchem ein Störsignal überlagert ist. Das Nutzsignal umfasst Datenpakete, welche jeweils ein definiertes Chirp-Signal und Nutzdaten umfassen.

Vorzugsweise erfolgt das Aufnehmen des Eingangssignals durch Abtastung eines Analogsignals. Dabei wird das Analogsignal in vorgegebenen, insbesondere äquidistanten Zeitabschnitten abgetastet und einzelne Werte werden gespeichert, welche das Eingangssignal bilden. Die einzelnen Werte des Eingangssignals stellen dabei komplexe Werte dar, welche einen Realteil und einen Imaginärteil aufweisen.

Anschließend erfolgt die Berechnung eines Ausgangssignals als Korrelation aus dem aufgenommenen Eingangssignal und einem Chirp-Referenzsignal mittels eines Korrelators. Bei der Korrelation erfolgt beispielsweise eine Multiplikation einer definierten Anzahl von Werten des Eingangssignals mit einer entsprechenden Anzahl von Werten des Chirp-Referenzsignals.

Auch die einzelnen Werte des Chirp-Referenzsignals stellen komplexe Werte dar, welche einen Realteil und einen Imaginärteil aufweisen. Somit stellen auch die einzelnen Werte des Ausgangssignals komplexe Werte dar, welche einen Realteil und einen Imaginärteil aufweisen. Die Werte des Eingangssignals, die Werte des Chirp-Referenzsignals und die Werte des Ausgangssignals sind auch als Zeiger mit einem Betrag und einer Phasenlage darstellbar.

Ferner erfolgt eine Berechnung eines Betrags des Eingangssignals aus dem aufgenommenen Eingangssignal. Die Berechnung des Betrags des Eingangssignals wird dabei für die definierte Anzahl von abgetasteten Werten des Eingangssignals durchgeführt, zu welchen die Werte des Ausgangssignals berechnet werden.

Ebenso erfolgt einer Berechnung eines Betrags des Ausgangssignals aus dem zuvor berechneten Ausgangssignal. Die Berechnung des Betrags des Ausgangssignals wird dabei für die zuvor berechneten Werte des Ausgangssignals durchgeführt.

Ferner erfolgt eine Berechnung einer Phasendifferenz zwischen dem Eingangssignal und dem Ausgangssignal. Die Berechnung der Phasendifferenz wird dabei für die definierte Anzahl von abgetasteten Werten des Eingangssignals mit den jeweils zugehörigen Werten des Ausgangssignals durchgeführt.

Anschließend erfolgt eine Berechnung eines synthetisierten Störsignals. Das synthetisierte Störsignal wird aus dem Betrag des Eingangssignals, dem Betrag des Ausgangssignals und der Phasendifferenz zwischen dem Eingangssignal und dem Ausgangssignal berechnet. Die Berechnung des synthetisierten Störsignals erfolgt mittels eines Rotators. Das synthetisierte Störsignal ist dabei eine Nachbildung des Störsignals.

Die Berechnung des synthetisierten Störsignals wird dabei für die definierte Anzahl von abgetasteten Werten des Eingangssignals mit den jeweils zugehörigen Werten des Ausgangssignals und den jeweils zugehörigen Werten der Phasendifferenz durchgeführt. Somit stellen auch die einzelnen Werte des synthetisierten Störsignals komplexe Werte dar, welche einen Realteil und einen Imaginärteil aufweisen. Die Werte des synthetisierten Störsignals sind auch als Zeiger mit einem Betrag und einer Phasenlage darstellbar.

Anschließend erfolgt eine Berechnung eines Residualsignals. Das Residualsignal wird dabei als Differenz aus dem Ausgangssignal und dem synthetisierten Störsignal mittels eines Subtrahierers berechnet. Die Berechnung des Residualsignals wird dabei für die berechneten Werte des Ausgangssignals mit den jeweils zugehörigen Werten des synthetisierten Störsignals durchgeführt. Durch Berechnung dieser Differenz wird der Signal-Rausch-Abstand vorteilhaft erhöht. Die Qualität der Nachbildung des Störsignals spielt dabei eine wichtige Rolle.

Gemäß einer vorteilhaften Ausgestaltung der Erfindung erfolgt dann die Detektion des Chirp-Signals aus dem Residualsignal.

Gemäß einer anderen vorteilhaften Ausgestaltung der Erfindung erfolgt eine Berechnung eines Betrags des Residualsignals aus dem Residualsignal. Die Berechnung des Betrags des Residualsignals wird dabei für die zuvor berechneten Werte des Residualsignals durchgeführt. Dann erfolgt die Detektion des Chirp-Signals aus dem Betrag des Residualsignals.

Gemäß einer vorteilhaften Weiterbildung der Erfindung wird aus mehreren Werten des Betrags des Eingangssignals ein Mittelwert gebildet, welcher dann als Betrag des Eingangssignals zur Berechnung des synthetisierten Störsignals verwendet wird.

Gemäß einer weiteren vorteilhaften Weiterbildung der Erfindung wird aus mehreren Werten des Betrags des Ausgangssignals ein Mittelwert gebildet, welcher dann als Betrag des Ausgangssignals zur Berechnung des synthetisierten Störsignals verwendet wird.

Gemäß noch einer vorteilhaften Weiterbildung der Erfindung wird aus mehreren berechneten Werten der Phasendifferenz ein Mittelwert gebildet, welcher dann als Phasendifferenz zur Berechnung des synthetisierten Störsignals verwendet wird.

Gemäß einer bevorzugten Ausgestaltung der Erfindung weist das Chirp-Referenzsignal eine zeitlich veränderliche Frequenz auf.

Es wird auch ein System zur Unterdrückung eines Störsignals bei der Detektion eines Chirp-Signals aus einem Eingangssignal vorgeschlagen. Das System ist in verschiedenen Bussystemen zur Datenübertragung verwendbar, insbesondere bei Powerline-Systemen.

Das System umfasst einen Korrelator zur Berechnung eines Ausgangssignals als Korrelation aus einem aufgenommenen Eingangssignal und einem Chirp-Referenzsignal. Bei der Korrelation erfolgt beispielsweise eine Multiplikation einer definierten Anzahl von Werten des Eingangssignals mit einer entsprechenden Anzahl von Werten des Chirp-Referenzsignals.

Die einzelnen Werte des Eingangssignals, die einzelnen Werte des Chirp-Referenzsignals und die einzelnen Werte des Ausgangssignals stellen jeweils komplexe Werte dar, welche einen Realteil und einen Imaginärteil aufweisen. Die Werte des Eingangssignals, die Werte des Chirp-Referenzsignals und die Werte des Ausgangssignals sind auch als Zeiger mit einem Betrag und einer Phasenlage darstellbar.

Das System umfasst auch einen Betragsbildner zur Berechnung eines Betrags des Eingangssignals aus dem Eingangssignal.

Das System umfasst auch einen Betragsbildner zur Berechnung eines Betrags des Ausgangssignals aus dem Ausgangssignal.

Das System umfasst ferner einen Phasenestimator zur Berechnung einer Phasendifferenz zwischen dem Eingangssignal und dem Ausgangssignal.

Ebenfalls umfasst das System einen Rotator zur Berechnung eines synthetisierten Störsignals aus dem Betrag des Eingangssignals, dem Betrag des Ausgangssignals und der Phasendifferenz.

Ebenfalls umfasst das System einen Subtrahierer zur Berechnung eines Residualsignals als Differenz aus dem Ausgangssignal und dem synthetisierten Störsignal.

Gemäß einer vorteilhaften Weiterbildung der Erfindung umfasst das System auch einen Betragsbildner zur Berechnung eines Betrags des Residualsignals aus dem Residualsignal.

Vorzugsweise umfasst das System auch einen Abtaster zum Aufnehmen des Eingangssignals durch Abtastung eines Analogsignals. Der Abtaster tastet in vorgegebenen, insbesondere äquidistanten Zeitabschnitten das Analogsignal ab und speichert einzelne Werte des Eingangssignals.

Gemäß einer vorteilhaften Weiterbildung der Erfindung umfasst das System einen Mittelwertbildner zur Berechnung eines Mittelwerts aus mehreren Werten des Betrags des Eingangssignals.

Gemäß einer weiteren vorteilhaften Weiterbildung der Erfindung umfasst das System einen Mittelwertbildner zur Berechnung eines Mittelwerts aus mehreren Werten des Betrags des Ausgangssignals.

Gemäß noch einer vorteilhaften Weiterbildung der Erfindung umfasst das System einen Mittelwertbildner zur Berechnung eines Mittelwerts aus mehreren Werten der Phasendifferenz.

Vorteile der Erfindung

Das erfindungsgemäße Verfahren sowie das erfindungsgemäße System ermöglichen eine zuverlässige Unterdrückung von Störsignalen bei der Detektion von Chirp-Signalen aus Eingangssignalen. Somit ist eine robuste und wenig störanfällige Übertragung von Daten über ein Bussystem ermöglicht. Insbesondere ist eine Synchronisierung von Datenpaketen zwischen Sendern und Empfängern bei der Übertragung von Daten über das Bussystem wenig störanfällig, auch wenn ein eingekoppeltes Störsignal eine gleiche oder ähnliche Frequenz wie das zu detektierende Chirp-Signal aufweist. Das Verfahren ist mathematisch verhältnismäßig einfach ausgebildet und erfordert nur eine verhältnismäßig geringe Rechenleistung. Somit ist das Verfahren insbesondere für Echtzeitanwendungen geeignet. Das erfindungsgemäße Verfahren sowie das erfindungsgemäße System sind nicht ausschließlich bei der Übertragung von Daten über Bussysteme sondern auch in anderen Anwendungen verwendbar. Als Beispiele seien hier Navigation und Entfernungsmessung genannt.

Kurze Beschreibung der Zeichnungen

Ausführungsformen der Erfindung werden anhand der Zeichnungen und der nachfolgenden Beschreibung näher erläutert.

Es zeigen:

Figur 1    eine schematische Darstellung eines Systems zur Unterdrückung eines Störsignals,

Figur 2    eine beispielhafte Darstellung mehrerer in dem System aus Figur 1 verarbeiteter Werte als Zeiger,

Figur 3a    einen beispielhaften zeitlichen Verlauf eines Ausgangssignals eines Korrelators bei der Detektion eines Chirp-Signals und,

Figur 3b    einen beispielhaften zeitlichen Verlauf eines Residualsignals bei der Detektion eines Chirp-Signals.

Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

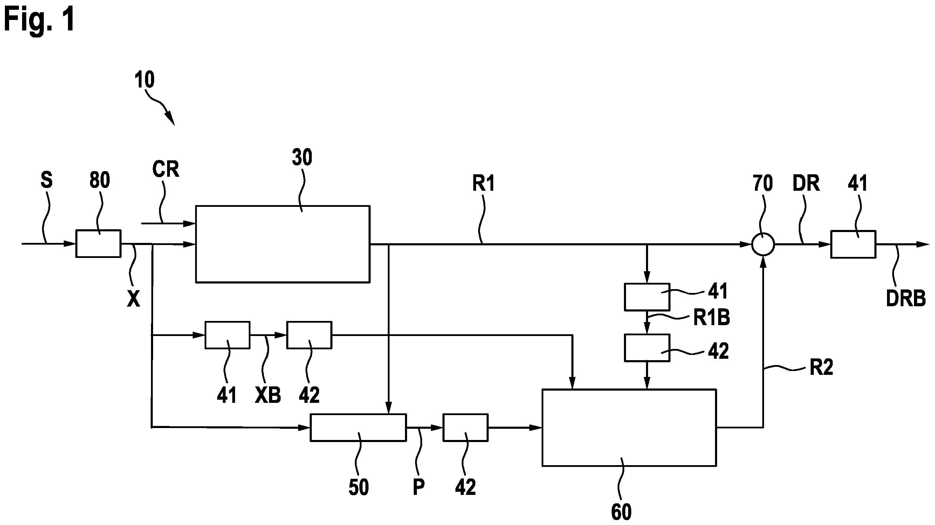

Figur 1 zeigt eine schematische Darstellung eines Systems 10 zur Unterdrückung eines Störsignals. Das System 10 umfasst einen Abtaster 80 zum Abtasten eines Analogsignals S. Bei dem Analogsignal S handelt es sich um ein Nutzsignal, welchem ein Störsignal überlagert ist. Das Nutzsignal umfasst Datenpakete, welche jeweils ein definiertes Chirp-Signal und Nutzdaten umfassen. Der Abtaster 80 tastet das Analogsignal S in äquidistanten Zeitabschnitten ab und speichert einzelne Werte $x_i$, welche ein Eingangssignal X bilden.

Das System 10 umfasst ferner einen Korrelator 30 zur Berechnung eines Ausgangssignals R1 als Korrelation aus dem aufgenommenen Eingangssignal X und einem Chirp-Referenzsignal CR. Bei der Korrelation in dem Korrelator 30 erfolgt eine Multiplikation einer definierten Anzahl n von Werten $x_i$ des Eingangssignals X mit einer entsprechenden Anzahl n von Werten $c_i$ des Chirp-Referenzsignals CR.

Die Korrelation, die in dem Korrelator 30 durchgeführt wird, wird mathematisch folgendermaßen beschrieben, wobei ein Laufindex i verwendet wird:

$$R1 = \frac{\sum_{i=1}^{n} x_i \cdot c_i}{\sqrt{\sum_{i=1}^{n} x_i^2 \cdot \sum_{i=1}^{n} c_i^2}}$$

Das System 10 umfasst einen Betragsbildner 41 zur Berechnung eines Betrags XB des Eingangssignals X aus dem Eingangssignal X. Ebenso umfasst das System 10 einen Mittelwertbildner 42 zur Berechnung eines Mittelwerts aus mehreren Werten des Betrags XB des Eingangssignals X.

Das System 10 umfasst einen Betragsbildner 41 zur Berechnung eines Betrags R1B des Ausgangssignals R1 aus dem Ausgangssignal R1. Ebenso umfasst das System 10 einen Mittelwertbildner 42 zur Berechnung eines Mittelwerts aus mehreren Werten des Betrags R1B des Ausgangssignals R1.

Das System 10 umfasst ferner einen Phasenestimator 50 zur Berechnung einer Phasendifferenz P zwischen dem Eingangssignal X und dem Ausgangssignal R1. Ebenso umfasst das System 10 einen Mittelwertbildner 42 zur Berechnung eines Mittelwerts aus mehreren Werten der Phasendifferenz P.

Ebenfalls umfasst das System 10 einen Rotator 60 zur Berechnung eines synthetisierten Störsignals R2 aus dem Betrag XB des Eingangssignals X, dem Betrag R1B des Ausgangssignals R1 und der Phasendifferenz P. Die Operation, die in dem Rotator 60 durchgeführt wird, kann mathematisch folgendermaßen beschrieben werden:

$$R2 = X\, e^{jP}\, R1B\, /\, XB$$

Ferner umfasst das System 10 einen Subtrahierer 70 zur Berechnung eines Residualsignals DR als Differenz aus dem Ausgangssignal R1 und dem synthetisierten Störsignal R2. Die Operation des Subtrahierers 70 kann mathematisch folgendermaßen beschrieben werden:

$$DR = R1 - R2$$

Aus dem Residualsignal DR kann eine Detektion des Chirp-Signals erfolgen. Das System 10 umfasst vorliegend aber auch einen Betragsbildner 41 zur Berechnung eines Betrags DRB des Residualsignals DR aus dem Residualsignal DR. Die Detektion des Chirp-Signals erfolgt dann aus dem Betrag DRB des Residualsignals DR.

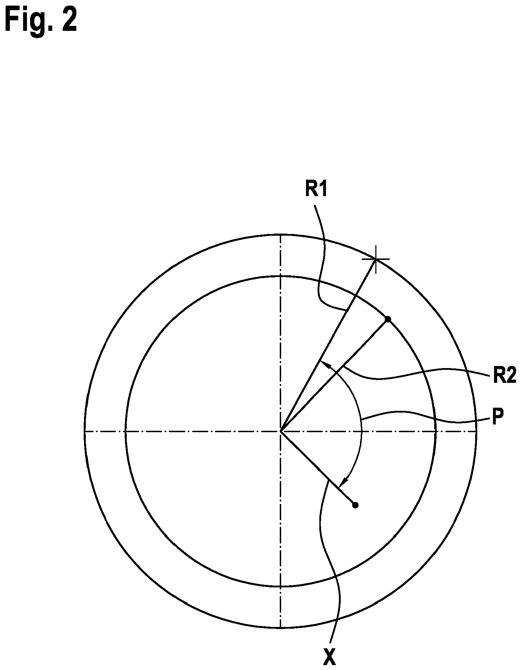

Die Werte des Eingangssignals X, die Werte des Ausgangssignals R1 und die Werte des synthetisierten Störsignals R2 sind auch als Zeiger mit einem Betrag und einer Phasenlage darstellbar. Figur 2 zeigt eine beispielhafte Darstellung des Eingangssignals X, des Ausgangssignals R1 und des synthetisierten Störsignals R2, welche in dem System 10 aus Figur 1 verarbeitet werden, als Zeiger. Die in dem Phasenestimator 50 berechnete Phasendifferenz P entspricht dabei einem Winkel zwischen dem Zeiger des Eingangssignals X und dem Zeiger des Ausgangssignals R1.

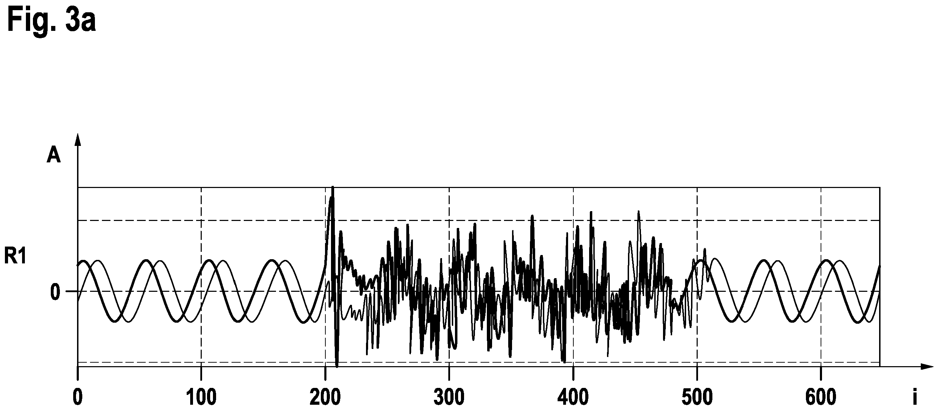

Figur 3a zeigt einen beispielhaften zeitlichen Verlauf eines Ausgangssignals R1 bei der Detektion eines Chirp-Signals anhand eines Diagramms. Auf der Ordinate des Diagramms ist dabei eine Amplitude A aufgetragen und auf der Abszisse des Diagramms ist der Laufindex i aufgetragen. In dem Diagramm sind dabei der Realteil des Ausgangssignals R1 und der Imaginärteil des Ausgangssignals R1 separat dargestellt. Etwa zum Zeitpunkt des 220ten Wertes des Ausgangssignals R1, also etwa wenn der Laufindex i den Wert 220 annimmt, wird vorliegend das Chirp-Signal erkannt.

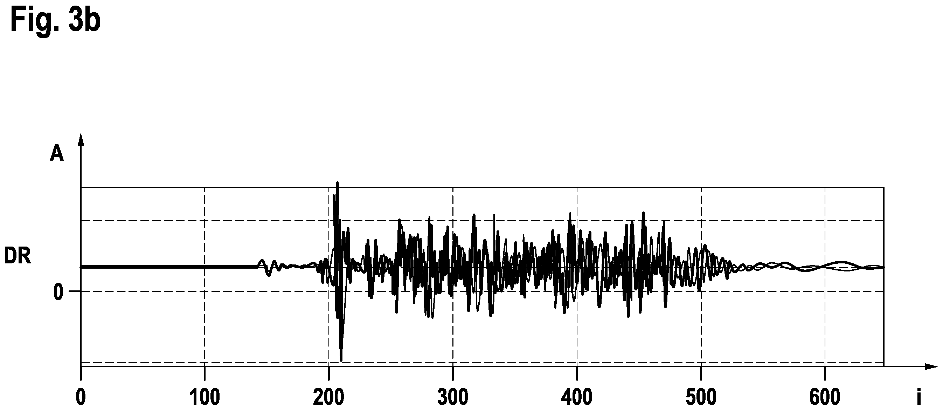

Figur 3b zeigt einen beispielhaften zeitlichen Verlauf eines Residualsignals DR bei der Detektion eines Chirp-Signals anhand eines Diagramms. Auf der Ordinate des Diagramms ist dabei eine Amplitude A aufgetragen und auf der Abszisse des Diagramms ist der Laufindex i aufgetragen. In dem Diagramm sind dabei der Realteil des Residualsignals DR und der Imaginärteil des Residualsignals DR separat dargestellt. Etwa zum Zeitpunkt des 220ten Wertes des Residualsignals DR, also etwa wenn der Laufindex i den Wert 220 annimmt, wird vorliegend das Chirp-Signal erkannt.

Aus der Darstellung in Figur 3b ist ersichtlich, dass im Vergleich zu dem in Figur 3a dargestellten zeitlichen Verlaufs des Ausgangssignals R1 die Amplitude A des Residualsignals DR vor der Detektion des Chirp-Signals, also bevor der Laufindex i den Wert 220 annimmt, deutlich geringer ist. Das Verhältnis der Amplitude A des Residualsignals DR bei Erkennung des Chirp-Signals zu der Amplitude A des Residualsignals DR vor Erkennung des Chirp-Signals ist somit deutlich größer als das Verhältnis der Amplitude A des Ausgangssignals R1 bei Erkennung des Chirp-Signals zu der Amplitude A des Ausgangssignals R1 vor Erkennung des Chirp-Signals.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

**Patentansprüche**

1. Verfahren zur Unterdrückung eines Störsignals bei der Detektion eines Chirp-Signals aus einem Eingangssignal (X),
   umfassend folgende Schritte:

   a. Aufnehmen des Eingangssignals (X);
   b. Berechnung eines Ausgangssignals (R1) als Korrelation aus dem aufgenommenen Eingangssignal (X) und einem Chirp-Referenzsignal (CR) mittels eines Korrelators (30);
   c. Berechnung eines Betrags (XB) des Eingangssignals (X) aus dem Eingangssignal (X);
   d. Berechnung eines Betrags (R1B) des Ausgangssignals (R1) aus dem Ausgangssignal (R1);
   e. Berechnung einer Phasendifferenz (P) zwischen dem Eingangssignal (X) und dem Ausgangssignal (R1);
   f. Berechnung eines synthetisierten Störsignals (R2) aus dem Betrag (XB) des Eingangssignals (X), dem Betrag (R1B) des Ausgangssignals (R1) und der Phasendifferenz (P) mittels eines Rotators (60);
   g. Berechnung eines Residualsignals (DR) als Differenz aus dem Ausgangssignal (R1) und dem synthetisierten Störsignal (R2).

2. Verfahren nach Anspruch 1, wobei die Detektion des Chirp-Signals aus dem Residualsignal (DR) erfolgt.

**3.** Verfahren nach Anspruch 1, wobei

eine Berechnung eines Betrags (DRB) des Residualsignals (DR) aus dem Residualsignal (DR) erfolgt, und
die Detektion des Chirp-Signals aus dem Betrag (DRB) des Residualsignal (DR) erfolgt.

**4.** Verfahren nach einem der vorstehenden Ansprüche, wobei
das Aufnehmen des Eingangssignals (X) durch Abtastung eines Analogsignals (S) erfolgt.

**5.** Verfahren nach einem der vorstehenden Ansprüche, wobei

aus mehreren Werten des Betrags (XB) des Eingangssignals (X) ein Mittelwert gebildet wird, und/oder wobei
aus mehreren Werten des Betrags (R1B) des Ausgangssignals (R1) ein Mittelwert gebildet wird und/oder wobei
aus mehreren Werten der Phasendifferenz (P) ein Mittelwert gebildet wird.

**6.** Verfahren nach einem der vorstehenden Ansprüche, wobei
das Chirp-Referenzsignal (CR) eine zeitlich veränderliche Frequenz aufweist.

**7.** System (10) zur Unterdrückung eines Störsignals bei der Detektion eines Chirp-Signals aus einem Eingangssignal (X), umfassend:

einen Korrelator (30) zur Berechnung eines Ausgangssignals (R1) als Korrelation aus einem aufgenommenen Eingangssignal (X) und einem Chirp-Referenzsignal (CR);
einen Betragsbildner (41) zur Berechnung eines Betrags (XB) des Eingangssignals (X) aus dem Eingangssignal (X);
einen Betragsbildner (41) zur Berechnung eines Betrags (R1B) des Ausgangssignals (R1) aus dem Ausgangssignal (R1);
einen Phasenestimator (50) zur Berechnung einer Phasendifferenz (P) zwischen dem Eingangssignal (X) und dem Ausgangssignal (R1);
einen Rotator (60) zur Berechnung eines synthetisierten Störsignals (R2)
aus dem Betrag (XB) des Eingangssignals (X), dem Betrag (R1B) des Ausgangssignals (R1) und der Phasendifferenz (P); und
einen Subtrahierer (70) zur Berechnung eines Residualsignals (DR) als Differenz aus dem Ausgangssignal (R1) und dem synthetisierten Störsignal(R2).

**8.** System (10) nach Anspruch 7, ferner umfassend

einen Betragsbildner (41) zur Berechnung eines Betrags (DRB) des Residualsignals (DR) aus dem Residualsignal (DR).

**9.** System (10) nach einem der Ansprüche 7 bis 8, ferner umfassend einen Abtaster (80) zum Aufnehmen des Eingangssignals (X) durch Abtastung eines Analogsignals (S).

**10.** System (10) nach einem der Ansprüche 7 bis 9, ferner umfassend

einen Mittelwertbildner (42) zur Berechnung eines Mittelwerts aus mehreren Werten des Betrags (XB) des Eingangssignals (X) und/oder
einen Mittelwertbildner (42) zur Berechnung eines Mittelwerts aus mehreren Werten des Betrags (R1B) des Ausgangssignals (R1) und/oder
einen Mittelwertbildner (42) zur Berechnung eines Mittelwerts aus mehreren Werten der Phasendifferenz (P).

**Claims**

**1.** Method for rejecting an interference signal when detecting a chirp signal from an input signal (X), comprising the following steps:

a. picking up the input signal (X);
b. computing an output signal (R1)
as a correlation from the picked-up input signal (X) and a chirp reference signal (CR) by means of a correlator (30);
c. computing an absolute value (XB) of the input signal (X)
from the input signal (X);
d. computing an absolute value (R1B) of the output signal (R1)
from the output signal (R1);
e. computing a phase difference (P)
between the input signal (X) and the output signal (R1);
f. computing a synthesized interference signal (R2)
from the absolute value (XB) of the input signal (X), the absolute value (R1B) of the output signal (R1) and the phase difference (P) by means of a rotator (60);
g. computing a residual signal (DR) as a difference
from the output signal (R1) and the synthesized interference signal (R2).

**2.** Method according to Claim 1, wherein
the chirp signal is detected from the residual signal (DR) .

**3.** Method according to Claim 1, wherein

an absolute value (DRB) of the residual signal (DR) is computed from the residual signal (DR), and

the chirp signal is detected from the absolute value (DRB) of the residual signal (DR).

**4.** Method according to one of the preceding claims, wherein

the input signal (X) is picked up by sampling an analog signal (S).

**5.** Method according to one of the preceding claims, wherein

a mean value is generated from multiple values of the absolute value (XB) of the input signal (X), and/or wherein

a mean value is generated from multiple values of the absolute value (R1B) of the output signal (R1) and/or wherein

a mean value is generated from multiple values of the phase difference (P).

**6.** Method according to one of the preceding claims, wherein

the chirp reference signal (CR) has a frequency that varies over time.

**7.** System (10) for rejecting an interference signal when detecting a chirp signal from an input signal (X), comprising:

a correlator (30) for computing an output signal (R1) as a correlation from a picked-up input signal (X) and a chirp reference signal (CR);

an absolute-value generator (41) for computing an absolute value (XB) of the input signal (X) from the input signal (X);

an absolute-value generator (41) for computing an absolute value (R1B) of the output signal (R1) from the output signal (R1);

a phase estimator (50) for computing a phase difference (P) between the input signal (X) and the output signal (R1) ;

a rotator (60) for computing a synthesized interference signal (R2)

from the absolute value (XB) of the input signal (X), the absolute value (R1B) of the output signal (R1) and the phase difference (P); and

a subtractor (70) for computing a residual signal (DR) as a difference from the output signal (R1) and the synthesized interference signal (R2).

**8.** System (10) according to Claim 7, further comprising an absolute-value generator (41) for computing an absolute value (DRB) of the residual signal (DR) from the residual signal (DR).

**9.** System (10) according to either of Claims 7 and 8, further comprising
a sampler (80) for picking up the input signal (X) by sampling an analog signal (S).

**10.** System (10) according to one of Claims 7 to 9, further comprising

an averaging unit (42) for computing a mean value from multiple values of the absolute value (XB) of the input signal (X) and/or

an averaging unit (42) for computing a mean value from multiple values of the absolute value (R1B) of the output signal (R1) and/or

an averaging unit (42) for computing a mean value from multiple values of the phase difference (P).

**Revendications**

**1.** Procédé de suppression d'un signal parasite lors de la détection d'un signal chirp dans un signal d'entrée (X), comprenant les étapes suivantes consistant à :

a. enregistrer le signal d'entrée (X) ;
b. calculer un signal de sortie (R1) comme une corrélation entre le signal d'entrée (X) enregistré et un signal chirp de référence (CR) au moyen d'un corrélateur (30) ;
c. calculer une grandeur (XB) du signal d'entrée (X) à partir du signal d'entrée (X) ;
d. calculer une grandeur (R1B) du signal de sortie (R1) à partir du signal de sortie (R1) ;
e. calculer une différence de phase (P) entre le signal d'entrée (X) et le signal de sortie (R1) ;
f. calculer un signal parasite synthétisé (R2) à partir de la grandeur (XB) du signal d'entrée (X), de la grandeur (R1B) du signal de sortie (R1) et de la différence de phase (P) au moyen d'un rotateur (60) ;
g. calculer un signal résiduel (DR) comme une différence entre le signal de sortie (R1) et le signal parasite synthétisé (R2).

**2.** Procédé selon la revendication 1, dans lequel la détection du signal chirp est effectuée à partir du signal résiduel (DR).

**3.** Procédé selon la revendication 1, dans lequel

un calcul d'une grandeur (DRB) du signal résiduel (DR) est effectué à partir du signal résiduel (DR), et
la détection du signal chirp est effectuée à partir de la grandeur (DRB) du signal résiduel (DR).

**4.** Procédé selon l'une quelconque des revendications précédentes, dans lequel l'enregistrement du signal d'entrée (X) est effectué par un échantillonnage d'un signal analogique (S).

**5.** Procédé selon l'une quelconque des revendications précédentes, dans lequel

une moyenne de plusieurs valeurs de la grandeur (XB) du signal d'entrée (X) est calculée, et/ou

une moyenne de plusieurs valeurs de la grandeur (R1B) du signal de sortie (R1) est calculée, et/ou

une moyenne de plusieurs valeurs de la différence de phase (P) est calculée.

**6.** Procédé selon l'une quelconque des revendications précédentes, dans lequel le signal chirp de référence (CR) présente une fréquence variable dans le temps.

**7.** Système (10) de suppression d'un signal parasite lors de la détection d'un signal chirp dans un signal d'entrée (X), comprenant :

un corrélateur (30) pour calculer un signal de sortie (R1) comme une corrélation entre un signal d'entrée (X) enregistré et un signal chirp de référence (CR) ;
un générateur de grandeur (41) pour calculer une grandeur (XB) du signal d'entrée (X) à partir du signal d'entrée (X) ;
un générateur de grandeur (41) pour calculer une grandeur (R1B) du signal de sortie (R1) à partir du signal de sortie (R1) ;
un estimateur de phase (50) pour calculer une différence de phase (P) entre le signal d'entrée (X) et le signal de sortie (R1) ;
un rotateur (60) pour calculer, un signal parasite synthétisé (R2) à partir de la grandeur (XB) du signal d'entrée (X), de la grandeur (R1B) du signal de sortie (R1) et de la différence de phase (P) ; et
un soustracteur (70) pour calculer un signal résiduel (DR) comme une différence entre le signal de sortie (R1) et le signal parasite synthétisé (R2).

**8.** Système (10) selon la revendication 7, comprenant en outre un générateur de grandeur (41) pour calculer une grandeur (DRB) du signal résiduel (DR) à partir du signal résiduel (DR).

**9.** Système (10) selon l'une quelconque des revendications 7 à 8, comprenant en outre un échantillonneur (80) pour enregistrer le signal d'entrée (X) par un échantillonnage d'un signal analogique (S).

**10.** Système (10) selon l'une quelconque des revendications 7 à 9, comprenant en outre un générateur de moyenne (42) pour calculer une moyenne de plusieurs valeurs de la grandeur (XB) du signal d'entrée (X) et/ou un générateur de moyenne (42) pour calculer une moyenne de plusieurs valeurs de la grandeur (R1B) du signal de sortie (R1) et/ou un générateur de moyenne (42) pour calculer une moyenne de plusieurs valeurs de la différence de phase (P).

# Fig. 1

EP 3 714 548 B1

# Fig. 2

Fig. 3a

**Fig. 3b**

EP 3 714 548 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1011234 A1
- US 20140112398 A
- DE 102012007874 A1
- CN 105553511
- WO 9619056 A1